# EUROPEAN PATENT APPLICATION

(11) **EP 4 403 700 A1**
(43) Date of publication of application: **24.07.2024**
(21) Application number: 22870270.0
(22) Date of filing: 14.09.2022
(51) Int. Cl.: E01B 25/30, E01B 25/24, B61B 13/10

(54) **TUBE STRUCTURE**

(30) Priority: 17.09.2021 KR 20210125047
(71) Applicant: POSCO Co., Ltd, Pohang-si, Gyeongsangbuk-do 37859 (KR)
(72) Inventor: CHO, Woo-Yeon, Incheon 21985 (KR)
(74) Representative: Meissner Bolte Partnerschaft mbB
(86) International application number: PCT/KR2022/013720
(87) International publication number: WO 2023/043186

(57) **Abstract**

The present invention provides a tube structure comprising: a tube body having therein a movement path along which a traveling body moves; and a reinforcing block that is made of a different material from the tube body and coupled to the tube body along the longitudinal direction of the tube body to reinforce the tube body, wherein the reinforcing block has a contact surface in surface contact with the outer surface of the tube body, and the contact surface extends along the longitudinal direction of the reinforcing block.

## Description

### Technical Field

The present disclosure relates to a tube structure.

### Background Art

It should be noted that the content described in this section simply provides background information on the present disclosure and does not constitute a conventional art.

In general, a high-speed train system has to solve two resistances, depending on velocity. The first has been in the direction of designing an aerodynamic traveling body to reduce exponentially rising air resistance, and the second has been in the direction of introducing a magnetic levitation system to reduce friction between the tracks and wheels.

The technology introduced for this purpose is a hyperloop device. Such a hyperloop device is a system that transports a moving vehicle by magnetic levitation within a sealed tube at a pressure at about 0.001 atmospheric pressure or less.

Electromagnetic and mechanical systems are also decisive for such a hyperloop device, but it is important to implement a tube structure to maintain a subvacuum state of about 0.001 atmospheric pressure or less, accounting for about 50% or more of initial investment costs.

### Summary of Disclosure

### Technical Problem

An aspect of the present disclosure is to provide a tube structure capable of improving resistance performance against collapse load while reducing a thickness of a tube body.

### Solution to Problem

According to an aspect of the present disclosure for achieving the aforementioned purpose, provided is a tube structure including: a tube body having therein a movement path along which a traveling body moves; and a reinforcing block that is formed of a different material from the tube body and coupled to the tube body in the longitudinal direction of the tube body to reinforce the tube body, wherein the reinforcing block has a contact surface in surface contact with the outer surface of the tube body, and the contact surface extends in the longitudinal direction of the reinforcing block.

The tube body may be comprised of a tubular member formed of a metal material, the reinforcing block may be comprised of precast concrete, and the contact surface has a shape corresponding to the outer surface of the tube body.

The reinforcing block may be coupled to an upper side of the tube body.

The tube body may be configured so that a plurality of unit tubes are continuously disposed in a longitudinal direction, and the reinforcing block may connect adjacent unit tubes.

The tube body may be configured so that a plurality of unit tubes are continuously disposed in the longitudinal direction, the reinforcing block may be configured so that a plurality of unit blocks are continuously disposed in the longitudinal direction, and the unit blocks may be installed over the unit tubes adjacent to each other to connect adjacent unit tubes.

The reinforcing block may be configured so that a plurality of unit blocks are continuously disposed in a longitudinal direction, and the unit block may include a plurality of unit block units in which at least one of an installation width in a width direction and a minimum installation height in a height direction is varied.

The reinforcing block may have an installation width in a range of 20 to 35% of a diameter of the tube body in a width direction.

The reinforcing block may be configured so that a minimum installation height in a height direction may be in a range of 10 to 20% of the installation width.

The tube structure may further include a fastening unit installed to protrude from the outer surface of the tube body, and fastened while penetrating through the reinforcing block to connect the tube body and the reinforcing block.

The fastening unit may be configured to detachably connect the tube body and the reinforcing block.

The fastening unit may include: a first fastening member formed to protrude from the outer surface of the tube body and penetrating through the reinforcing block; and a second fastening member detachably fastened to the first fastening member, and configured to make the contact surface of the reinforcing block close to the outer surface of the tube body.

A plurality of fastening units may be formed to be spaced apart from each other in the longitudinal direction of the tube body, and a plurality of first fastening members may be formed to be spaced apart from each other in a circumferential direction of the tube body.

The tube body may be configured so that a plurality of unit tubes are continuously disposed in a longitudinal direction, and the tube structure further may include: a sealing unit having a ring-shaped shape into which an end region of the adjacent unit tubes in the longitudinal direction is inserted and a space between the adjacent unit tubes is sealed.

The sealing unit may include: a sealing body disposed between two adjacent unit tubes; a first insertion groove formed on one side of the sealing body and into which the unit tube of one side is inserted; and a second insertion groove formed on the other side of the sealing body and into which the unit tube of the other side is inserted.

### Advantageous Effects of Disclosure

According to an aspect of the present disclosure, there is an effect of improving resistance to collapse load while reducing a thickness of a tube body.

### Brief Description of Drawings

FIG. 1 is a view illustrating a difference in thickness between a support tube structure supporting a collapse load and a support tube structure supporting a collapse load and a bending load at the same time.
FIG. 2 is a view illustrating a tube structure according to a comparative example in contrast to a tube structure of the present disclosure.
FIG. 3 is a view illustrating an exploded state of a tube structure according to an embodiment of the present disclosure.
FIG. 4 is a view illustrating a coupled state of FIG. 3.
FIG. 5 is a perspective view of a tube structure according to an embodiment of the present disclosure.
FIG. 6 is a diagram illustrating a plurality of unit block units included in a tube structure according to an embodiment of the present disclosure.
FIG. 7 is a perspective view illustrating a state in which a plurality of unit tubes are connected by unit blocks.
FIG. 8 is a view illustrating a state in which a plurality of unit tubes and a plurality of unit blocks of a tube structure according to an embodiment of the present disclosure are connected.
FIG. 9 is a cross-sectional view illustrating a tube structure according to another embodiment of the present disclosure.

### Best Mode for Disclosure

Hereinafter, with reference to the drawings, specific embodiments of the present disclosure will be described. However, embodiments of the disclosed technology may be modified into various different forms, and the scope of the disclosed technology is not limited to the suggested embodiments. Furthermore, embodiments of the disclosed technology are provided to more fully explain the disclosed technology to those skilled in the art who understand the idea of the disclosed technology. In the drawings, the shapes and dimensions of elements may be exaggerated for further clarity.

A tube structure 10 according to the present disclosure is intended to be used as a tube in which a traveling body moves at regular intervals from an internal surface and an interior thereof is vacuum, and in the tube structure 10, resistance performance against a collapse load must be sufficiently secured.

The tube structure 10 of the present disclosure intends to be configured so that existing atmospheric pressure (1 atmospheric pressure) is introduced into a sealed tube structure 10 at 0.001 atmospheric pressure on a stratosphere level of 50 km from the ground.

In these attempts, systems that levitate and propel a system electronically and mechanically are also decisive, but in an infrastructure accounting for 50% or more of initial investment costs, it may be important to implement the tube structure 10 for maintaining a vacuum state corresponding to 0.001 atmospheric pressure or less or a state equivalent to a vacuum.

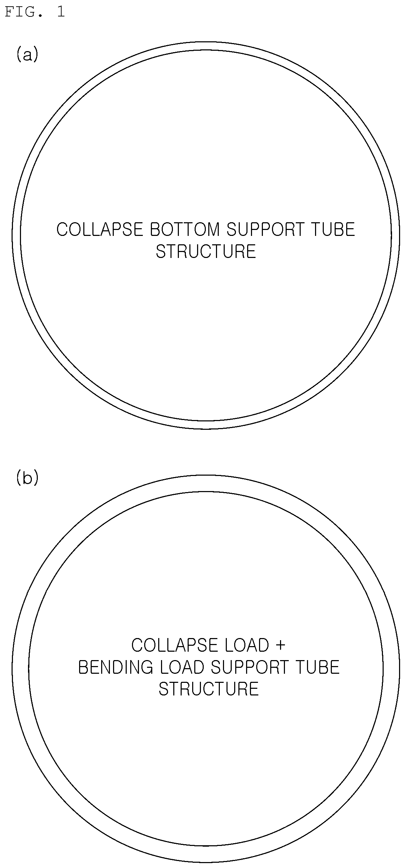

FIG. 1 is a view illustrating a difference in thickness between a support tube structure supporting a collapse load and a support tube structure supporting a collapse load and a bending load at the same time.

When only the collapse load is considered as illustrated in FIG. 1A, although the thickness of the support tube structure may be formed to be thin, but when the collapse load and the bending load are simultaneously considered as illustrated in FIG. 1B, the thickness of the support tube structure has no choice but to become thicker.

The tube structure 10 of the present disclosure is intended to stably support the collapse load and the bending load while reducing the thickness of the tube body by installing a reinforcing block in a tube body.

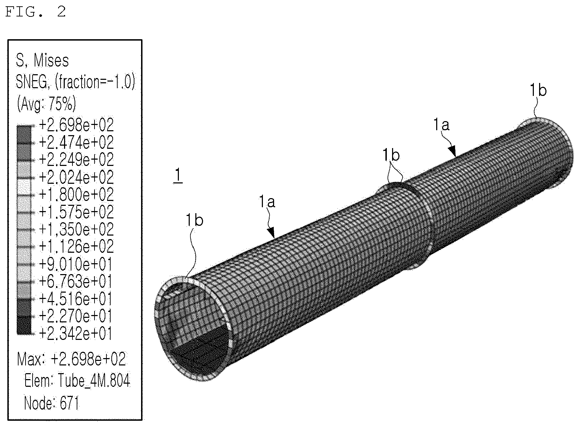

FIG. 2 is a view illustrating a tube structure 1 according to a comparative example in contrast to a tube structure of the present disclosure.

Referring to FIG. 2, unlike the tube structure of the present disclosure, the tube structure 1 according to the comparative example of the present disclosure may be formed by connecting a plurality of unit tubes 1a formed of a steel material in a longitudinal direction without forming the reinforcing block. In this case, a connection of the unit tubes 1a uses a method of bolt-fastening a flange 1b.

In the case of the comparative example, in order to maintain the vacuum while resisting the bending load, it may be necessary to manufacture the flange 1b that is significantly precise and can resist the load, and manufacturing costs thereof may be high.

Furthermore, in the case of the comparative example, when a diameter of the tube structure (1) is enlarged, a thickness of the tube body formed of a steel material also increases relatively, but when a diameter increases to 4m according to the common pipeline design standard (DNV OS F101), a safety thickness of the unit tube 1a which secures resistance performance against the collapse load along with a safety rate increases to 28.4mm.

When the diameter of the tube structure 1 becomes larger than 4 m, the thickness of the unit tube 1a increases by more than 28.4 mm.

In the case of the comparative example, as the thickness of the unit tube 1a having a large diameter increases, the amount of steel required for manufacturing the unit tube 1a increases exponentially, and the initial investment costs may increase rapidly.

Furthermore, in the case of the comparative example, when the diameter of the tube structure 1 is greater than 4m, a thickness of the steel material for manufacturing the unit tube 1a increases by more than 28.4 mm, and when the thickness thereof is greater than 25 mm, a production method of the unit tube 1a may be greatly restricted.

In general, production facilities are set so that a hot-rolled coil is manufactured within a thickness of 25 mm, and up, and a steel product having a thickness of 25 mm or more that cannot be produced as the hot-rolled coil must be manufactured as a rear plate. However, there may be a problem in that production costs of a rear plate product is far higher in that the rear plate product is produced using a production method (e.g., JCO, UOE, roll bending, etc.) that cannot be continuously processed when producing unit tubes.

Accordingly, a thickness of a tube may be 25 mm or less so that a continuous process may be performed in the manufacture of a unit tube for forming the tube structure, and the initial investment costs are reduced.

To this end, the tube structure 10 of the present disclosure may reduce the thickness of the tube body 100 to 25 mm or less by adding a reinforcing block 200 to the tube body 100.

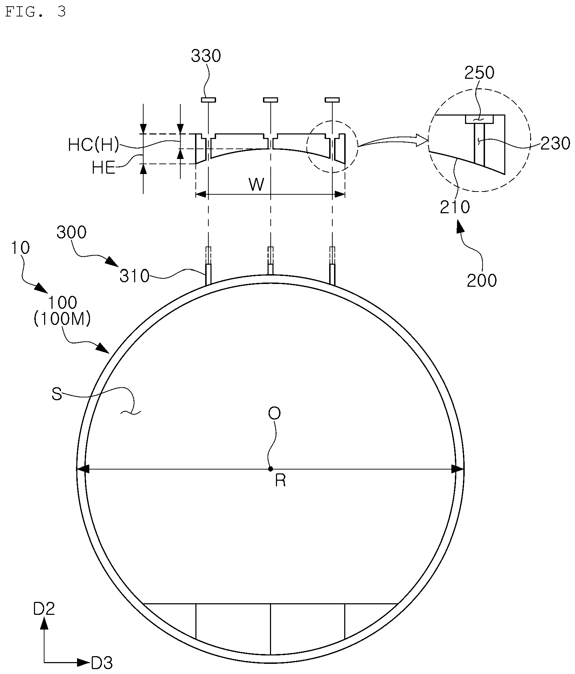

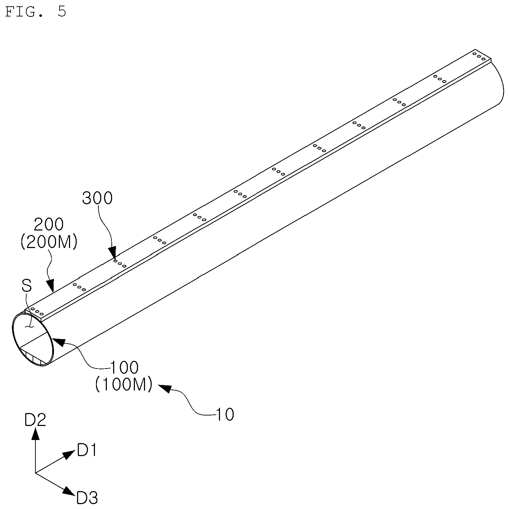

Hereinafter, components included in the tube structure 10 according to an embodiment of the present disclosure will be described in detail with reference to FIGS. 3 to 5.

The tube structure 10 according to an embodiment of the present disclosure may include a tube body 100 and a reinforcing block 200.

The tube body 100 may form a movement path S along which a traveling body moves, and the traveling body may move at regular intervals from an internal surface of the tube body 100.

For example, the traveling body may be a train moving along the movement path S inside the tube main body 100 at velocity of 300 km/h or more.

The tube body 100 may support a collapse load resulting from a pressure difference between atmospheric pressure and internal pressure of the tube body 100 lower than the atmospheric pressure.

The tube body 100 may have a vacuum state or an internal pressure corresponding to the vacuum state.

When an interior of the tube body 100 is in a vacuum state, the tube body 100 does not have internal pressure. In the case of the vacuum state, an extremely low internal pressure may exist inside the tube body 100. For example, the tube body 100 may have an internal pressure of 0.001 atmospheric pressure or less in a state corresponding to the vacuum state.

The reinforcing block 200 may be formed of a different material from the tube body 100, and may be coupled to the tube body 100 along a longitudinal direction D1 of the tube body 100 to reinforce the tube body 100.

The reinforcing block 200 may mainly support a bending load generated by a self-weight of the tube structure 10 and a load of the traveling body.

The reinforcing block 200 may have a contact surface 210 in surface contact with an outer surface of the tube body 100, and the contact surface 210 may extend in the longitudinal direction D1 of the reinforcing block 200.

The reinforcing block 200 may be installed in the longitudinal direction D1 of the tube body 100, and the reinforcing block 200 and the tube body 100 may have lengths corresponding to each other.

The reinforcing block 200 may have the contact surface 210 formed on a lower side thereof, and the contact surface 210 may be continuously formed in the longitudinal direction D1 of the reinforcing block 200.

When the tube body 100 resists atmospheric pressure in a state in which in the reinforcing block 200, the contact surface 210 is in surface contact with the outer surface of the tube body 100, the collapse load and the bending load acting on the tube structure 10 may be stably supported by forming a fixed boundary surface.

For example, the contact surface 210 may be formed in an entire longitudinal direction D1 of the reinforcing block 200.

The reinforcing block 200 may adjust an installation width W and a minimum installation height H of the reinforcing block 200 so that the tube structure 10 may resist a targeted bending load.

Here, the installation width W of the reinforcing block 200 is a width at which the reinforcing block 200 is installed in a width direction D3, and the minimum installation height H is a minimum height at which the reinforcing block 200 is installed in a height direction D2.

For example, the reinforcing block 200 may have a central installation height HC which is a minimum installation height H, on an extension line in a height direction D2 of a central axis O of the tube body 100, and may have an end installation height HE greater than the minimum installation height H at an end in a width direction D3.

The reinforcing block 200 may satisfy a load condition of a bending load targeted by the tube structure 10 by varying at least one of the installation width W in the width direction D3 and the minimum installation height H in the height direction D2.

The reinforcing block 200 may have a minimum installation height H on an extension line in the height direction D2 of a portion corresponding to the central axis O of the tube body 100.

In the reinforcing block 200, a central installation height HC which is an installation height at a center in the width direction D3 has a minimum installation height H, and an end installation height HE which is an installation height at an end in the width direction D3 may be greater than the center installation height HC.

The reinforcing block 200 may have an arc-shaped contact surface 210 having a shape corresponding to an upper side of the tube body 100 formed on a lower side thereof.

For example, an installation height of the reinforcing block 200 may increase from the center in the width direction D3 to the end in the width direction D3.

The tube structure 10 of the present disclosure may reinforce rigidity by installing the reinforcing block 200 in the tube body 100, thereby improving resistance performance against the collapse load while reducing the thickness of the tube body 100.

As the tube structure 10 of the present disclosure reinforces rigidity by installing the reinforcing block 200 on the tube body 100, the tube body 100 may mainly resists the collapse load generated by the pressure difference between the internal pressure of the tube body 100 and the external pressure as atmospheric pressure, and the reinforcing block 200 may mainly support the bending load generated by a self-weight of the tube structure 10 and a load of the traveling body.

Accordingly, as the reinforcing block 200 mainly resists the bending load and the tube body 100 mainly resists the collapse load, economic efficiency may be improved by reducing a thickness of the tube body 100, and unlike the comparative example described above, the thickness of the tube body 100 used in the tube structure 10 may be maintained to be constant, and thus, there is no need to re-design a cross-section of the tube body 100 according to changes in the bending load conditions, thereby providing convenience in design.

In the case of the comparative example described above, the tube structure 10 is manufactured according to the design standard of a common pipeline, and when a diameter R thereof increases to 4m, a safety thickness for securing resistance against the collapse load along with a safety factor increases to 28.4 mm, and there may be a problem in that significant restrictions may occur in a production method of the tube body 100 formed of metal materials such as steel materials.

In the tube structure 10 according to an embodiment of the present disclosure, due to the reinforcing block 200, it may be possible to reduce the thickness of the tube body 100 to 25 mm or less while securing the same performance, and accordingly, unlike the comparative example described above, there are no restrictions on the production method of the tube body 100 formed of metal materials such as steel materials, thereby economically and stably producing the tube body 100.

Hereinafter, comparative experiments through simulation of central sagging of a first experimental example (steel tube + concrete block) corresponding to the tube structure 10 of the present disclosure and a second experimental example (steel tube) compared to the first experimental example, and effects thereof will be briefly described with reference to Table 1 below.

A steel tube applied to the first experimental example applied to the comparative experimental example is 4m in diameter R and 19 mm in thickness of a tube, a steel tube applied to the second experimental example is 4m in diameter R and 19 mm in thickness, and a concrete block is 1m in installation width W and 0.2m in minimum height H.

For both the first and second experimental examples, comparative experiments were conducted under the condition in which a span thereof is 24m.

In Table 1 below, a dead load is a distribution load, and the second experimental example with a concrete block added has a larger dead load. A live load is a load of the driving body, and the first experimental example and the second experimental embodiment have the same live load.

The central sagging of the first experimental example is 2.08, and the example of the second experimental example is 1.23, from which it may be seen that the first experimental example corresponding to the tube structure 10 of the present disclosure has the effect of reducing the example by about 41% as compared to the second experimental example.

**Table 1:**

| | SPAN (m) | DEAD LOAD (kN/m) | LIVE LOAD (kN) | CROSS-SECTIONAL SECOND MOMENT (m^4) | CENTRAL SAGGING (mm) | REDUCTION RATE (%) |
|---|---|---|---|---|---|---|
| FIRST EXPERIMENTAL EXAMPLE | 24 | 11.9 | 20 | 0.13 | 2.08 | - |
| SECOND EXPERIMENTAL EXAMPLE | 24 | 16.7 | 20 | 0.30 | 1.23 | 41 |

The tube body 100 may be comprised of a tubular member formed of a metal material, the reinforcing block 200 may be comprised of precast concrete, and the contact surface 210 may have a shape corresponding to an outer surface of the tube body 100. The tube body 100 may be comprised of a tubular member having a circular cross-section, and a lower surface of the reinforcing block 200 may have an arc-shaped contact surface 210 formed to correspond to a shape of an upper surface of the tube body 100.

In this case, the arc-shaped contact surface 210 of the reinforcing block 200 and the outer surface of the tube body 100 may be in surface contact with each other.

In an example, the tube body 100 may be formed of a steel material and may be comprised of the tubular member having the diameter R of 3m or more.

In another example, the tube body 100 may be formed of a steel material and may be comprised of the tubular member having the diameter R of 4m or more.

The reinforcing block 200 may be coupled to an upper side of the tube body 100.

The contact surface 210 of the reinforcing block 200 may be in surface contact with the outer surface of the upper side of the tube body 100 in the longitudinal direction D1.

In a vacuum state without the internal pressure of the tube or in a state with an internal pressure equivalent to the vacuum state, when an external atmospheric pressure of 1 atmospheric pressure is applied and an active load is applied as the traveling body moves inside the tube, deformation intensively occurs in an upper area of the tube body 100.

Accordingly, the tube structure 10 of the present disclosure uses a composite of a steel material and concrete so that the reinforcing block coupled to an upper portion of the tube body 100 fixes the deformation concentrated on the upper side of the tube body 100, thereby easily controlling the deformation by inducing a change in a boundary condition, and improving overall load resistance performance of the tube structure 10.

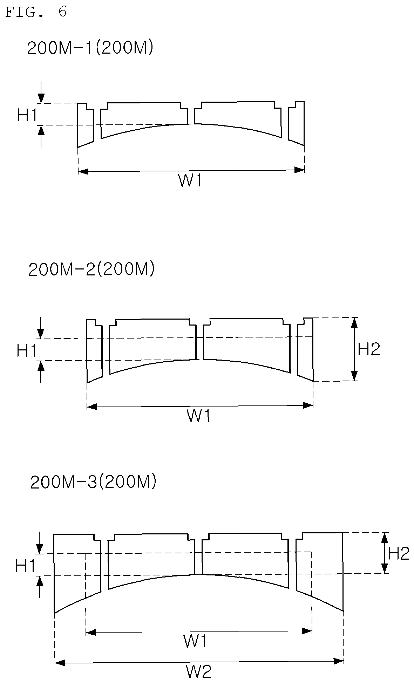

Referring to FIGS. 6 to 8, the tube body 100 may be configured so that a plurality of unit tubes 100M may be continuously disposed in the longitudinal direction D1, the reinforcing block 200 may be configured so that a plurality of unit blocks 200M may be continuously disposed in the longitudinal direction D1, and the unit block 200M may be installed over the adjacent unit tubes 100M to connect adjacent unit tubes 100M.

In an example, the unit block 200M may be connected to the tube body 100 by a fastening unit 300.

In another example, although not illustrated, the unit block 200M and the tube body 100 may be connected by applying a binder material such as an adhesive between the contact surface 210 of the unit block 200M and the outer surface of the tube body 100.

A plurality of unit blocks 200M may be disposed to be continuous in the longitudinal direction D1, and the adjacent unit blocks 200M may be connected to each other. A block connector (not illustrated) may be installed between the adjacent unit blocks 200M to connect the adjacent unit blocks 200M in the longitudinal direction D1.

A method of connecting adjacent unit blocks 200M is not limited to this method, and various methods of connecting structures formed of precast concrete may be applied.

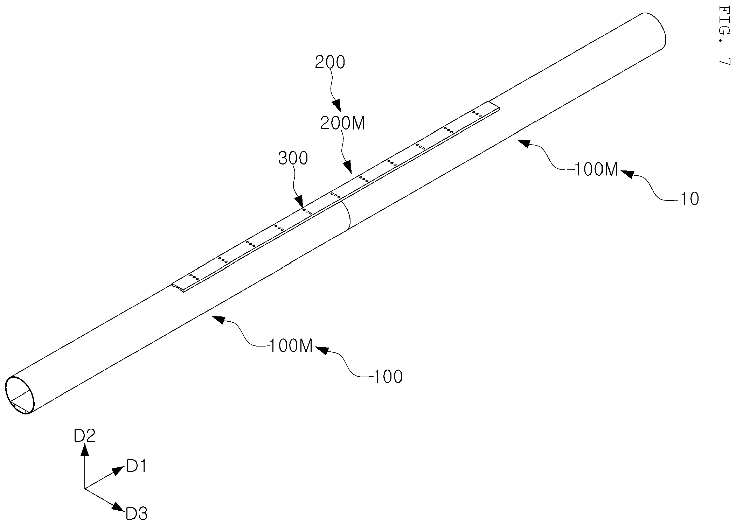

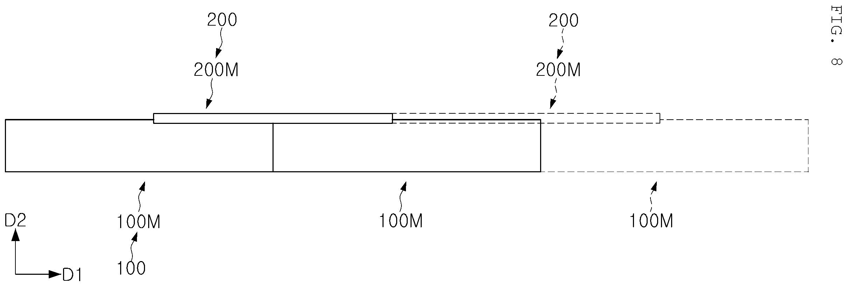

Referring to FIGS. 7 and 8, in the tube body 100, a plurality of unit tubes 100M may be continuously disposed in the longitudinal direction D1, and the reinforcing block 200 may connect adjacent unit tubes 100M.

The tube body 100 may form a movement path S in which the traveling body moves while the plurality of unit tubes 100M are continuous in the longitudinal direction D1.

Referring to FIG. 6, in the reinforcing block 200, a plurality of unit blocks 200M may be continuously disposed in the longitudinal direction D1, and the unit blocks 200M may include a plurality of unit block 200M units in which at least one of the installation width W in the width direction D3 and the minimum installation height H in the height direction D2 is varied.

For example, the unit block 200M may include a plurality unit block 200M units in which at least one of the installation width W in the width direction D3 and the minimum installation height H in the height direction D2 is varied.

Among the plurality of unit block 200M units, a unit block 200M unit having an installation width W and a minimum installation height H suitable for a bending load condition targeted by the tube structure 10 of the present disclosure may be installed.

For example, referring to FIG. 6, the unit block 200M may include a first unit block unit 200M-1, a second unit block unit 200M-2, and a third unit block unit 200M-3.

The first unit block unit 200M-1 may have a first installation width W1 and a first minimum installation height H1, the second unit block unit 200M-2 may have the first installation width W1 and a second minimum installation height H2 greater than the first minimum installation height H1, and the third unit block unit 200M-3 may have a second installation width W2 greater than the first installation width W1 and the second minimum installation height H2 greater than the first minimum installation height H1.

The tube structure 10 of the present disclosure has the effect of satisfying the load condition of the tube structure 10 by selectively selecting at least one of a plurality of unit block 200M units in which the installation width W in the width direction D3 and the minimum installation height H in the height direction D2 is varied.

For example, according to pre-calculated design requirements, the first unit block unit 200M-1 may be installed in a condition in which the span is 20m, the second unit block unit 200M-2 may be installed in a condition in which the span is 25m, and the third unit block unit 200M-3 may be installed in a condition in which the span is 30m.

By designing and standardizing the plurality of unit block 200M units in advance according to various load conditions, it may be possible to quickly and accurately produce a large amount of unit block units in factories or the like by selecting and applying a unit block 200M unit suitable for the load condition among the plurality of unit block 200M units, thereby improving the workability of the tube structure 10 of the present disclosure.

In an example, the reinforcing block 200 may have an installation width W in a range of 20 to 35% of a diameter R of the tube body 100 in the width direction D3.

When the installation width W of the reinforcing block 200 is less than 20% of the diameter R of the tube body 100, it may be difficult to stably support the collapse load and the bending load acting on the tube structure 10 because the tube body 100 and the reinforcing block cannot be in contact with each other by a sufficient surface contact manner.

When the installation width W of the reinforcing block 200 exceeds 35% of the diameter R of the tube body 100, a self-weight of the reinforcing block 200 may increase excessively, and a sagging amount of the tube structure 10 may increase, which may cause inefficient sectional performance.

In another example, the reinforcing block unit 200 may have a minimum installation height H in the height direction D2 ranging from 10 to 20% of the installation width W.

When the minimum installation height H in the height direction D2 in the reinforcing block 200 is less than 10% of the installation width W, the reinforcing block 200 may find it difficult to stably support the collapse load and the bending load acting on the tube structure 10.

When the minimum installation height H in the height direction D2 in the reinforcing block 200 exceeds 20% of the installation width W, the self-weight of the reinforcing block 200 may increase excessively, and the sagging amount of the tube structure 10 may increase, which may cause inefficient sectional performance.

In another example, the reinforcing block 200 may have an installation width W in the range of 20 to 35% of the diameter R of the tube body 100 in the width direction D3, and may have a minimum installation height H in the range of 10 to 20% of the installation width W in the height direction D2.

In this case, as described above, the reinforcing block 200 may stably support the collapse load and the bending load acting on the tube structure 10, and may prevent an excessive increase in the self-weight of the reinforcing block 200 to improve the sectional performance of the tube structure 10.

The tube structure 10 according to another embodiment of the present disclosure may further include a fastening unit 300.

The fastening unit 300 may be installed to protrude from an outer surface of a tube body 100, and may be fastened while penetrating through a reinforcing block 200, thus connecting the tube body 100 and the reinforcing block 200.

The fastening unit 300 may bring the contact surface 210 of the reinforcing block 200 into close contact with an upper outer surface of the tube body 100.

The fastening unit 300 may detachably connect the tube body 100 and the reinforcing block 200.

Since the fastening unit 300 detachably fixes the tube body 100 and the reinforcing block 200, maintenance of the tube structure 10 may be facilitated by easily replacing damaged components.

In addition, by dismantling and reinstalling the fastening unit 300, the tube body 100 which mainly resists the collapse load may be left intact, and the reinforcing block 200 may be replaced according to the load conditions of the tube structure 10, so that the load conditions of the tube structure 10 may be satisfied in a simple manner.

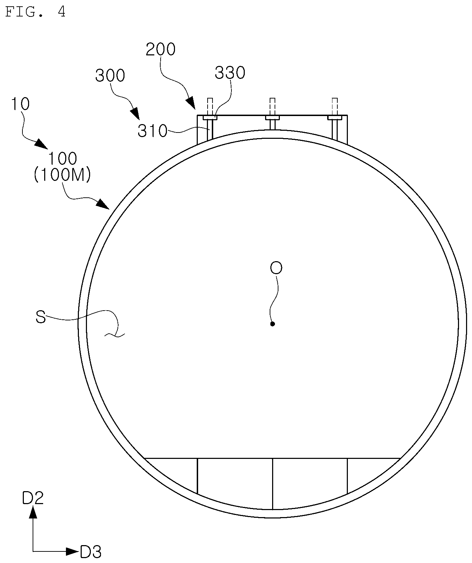

Referring to FIGS. 3 and 4, the fastening unit 300 may include a first fastening member 310 and a second fastening member 330.

The first fastening member 310 may be formed to protrude upwardly from the outer surface of the tube body 100 to penetrate through the reinforcing block 200.

A lower end of the first fastening member 310 may bonded to the outer surface of the tube body 100, may extend in the height direction D2, and may penetrate through a slot hole 230 formed in the reinforcing block 200.

A plurality of first fastening members 310 may have upper ends whose heights correspond to each other.

For example, the first fastening member 310 may be composed of a pin member or a bolt member formed to protrude upwardly from the outer surface of the tube body 100.

For example, the first fastening member (310) may be integrally bonded to the outer surface of the tube body 100 in a manner in which pin members or bolt members are bonded by welding or the like.

In a state in which the tube body 100 and the reinforcing block 200 are fastened by the first fastening member 310 and the second fastening member 330, the first fastening member 310 may additionally protrude upwardly from the reinforcing block 200.

This is to ensure that the minimum installation height H of the reinforcing block 200 may vary depending on the load condition of the tube structure 10, and that the reinforcing block 200 with a thicker minimum installation height H may be stably installed.

After the first fastening member 310 and the second fastening member 330 are installed, a protruding portion of the first fastening member 310 (indicated by a dotted line in FIGS. 3 and 4) may be removed to perform a finishing operation so as not to protrude from the upper surface of the reinforcing block 200.

The second fastening member 330 may be detachably fastened to the first fastening member 310, and may bring the contact surface 210 of the reinforcing block 200 into close contact with the outer surface of the tube body 100.

The second fastening member 330 may be disposed in an internal groove 250 of the reinforcing block 200 while being fastened to the first fastening member 310.

For example, the first fastening member 310 may have an external thread formed on an outer surface thereof, and the second fastening member 330 having an internal thread may be fastened to the first fastening member 310.

A plurality of internal grooves 250 may be formed on the upper surface of the reinforcing block 200, the plurality of internal grooves 250 may be disposed at heights corresponding to each other, and the plurality of second fastening members 330 may be disposed at heights corresponding to each other.

A pin fixing member or a nut member may be provided to be detachably fastened to the second fastening member 330. When the first fastening member 310 is a pin member, the second fastening member 330 may be provided as a pin fixing member, and when the first fastening member 310 is a bolt member, the second fastening member 330 may be provided as a nut member.

A plurality of fastening units 300 may be formed to be spaced apart from each other in the longitudinal direction D1 of the tube body 100, and a plurality of first fastening members 310 may be formed to be spaced apart from each other in a circumferential direction of the tube body 100.

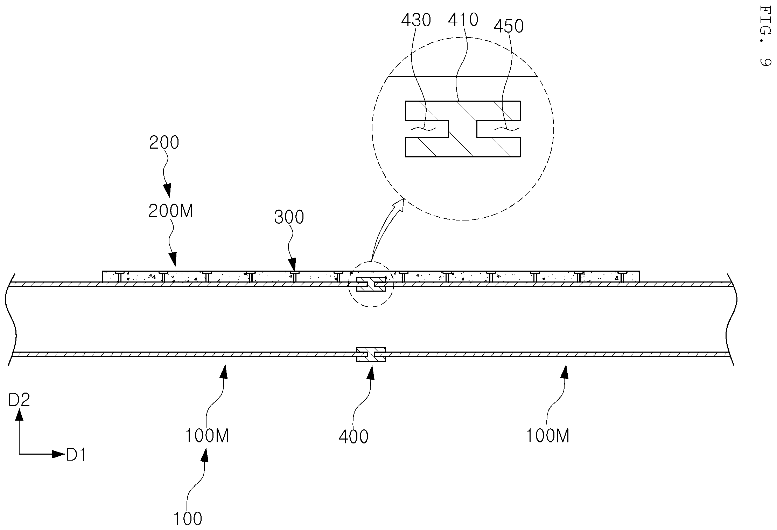

Referring to FIG. 9, the tube structure 10 according to another embodiment of the present disclosure may further include a sealing unit 400.

In the tube body 100, a plurality of unit tubes 100M may be continuously disposed in the longitudinal direction D1, and the sealing unit 400 may have a ring-shaped shape in which an end region in the longitudinal direction D1 of the adjacent unit tube 100M is inserted and a space between the adjacent unit tubes 100M is sealed.

The sealing unit 400 may be formed of a material that is softer than the tube body 100.

For example, the sealing unit 400 may be formed of a rubber material that is a soft material.

In the sealing unit 400, the end region of the unit tube 100M may be inserted in the longitudinal direction D1, and the sealing unit 400 may seal the space between two adjacent unit tubes 100M.

When an interior of the tube body 100 is a vacuum state or an internal pressure equivalent to the vacuum state or, the sealing unit 400, softer than the tube body 100, may be in close contact with the unit tube 100M and may naturally seal the space between the unit tube 100M and the sealing unit 400, thereby maintaining airtightness.

In another example, the sealing unit 400 may be formed of a thin metal gasket or the like, softer than the tube body 100.

The sealing unit 400 may have a ring-shaped cross-section to correspond to a cross-section of the unit tube 100M, and the end of the unit tube 100M may be inserted into the sealing unit 400.

The sealing unit 400 may include a sealing body 410, a first insertion groove 430, and a second insertion groove 450.

The sealing body 410 may be disposed between two adjacent unit tubes 100M.

The first insertion groove 430 may be formed at one side of the sealing body 410, and the unit tube 100M at one side thereof may be inserted into the first insertion groove 430.

The second insertion groove 450 may be formed on the other side of the sealing body 410, and the unit tube 100M on the other side may be inserted into the second insertion groove 450.

The sealing unit 400 may have an "H-shaped" cross-section at a portion in which one side of a ring shape is cut.

The first insertion groove 430 and the second insertion groove 450 may be formed in open portions of both sides of the "H-shaped" cross-section.

The sealing unit 400 may have a ring shape as a whole, and may have the 'H' shape cross-section when one side of a ring-shaped member is cut.

The tube structure 10 of the present disclosure may reduce costs as compared to a flange bonding method of the comparative example described above with respect to the first and second insertion grooves of the sealing unit 400, and may absorb deformation according to a temperature load.

Although the example embodiment of the present disclosure has been described in detail above, it will be obvious to those skilled in the art that the scope of the present disclosure is not limited thereto, and various modifications and variation may be made without departing from the technical concept of the present disclosure described in the claims.

### Description of Reference Characters

1: Tube Structure of Comparative Example 1a: Unit Tube
1b: Flange 10: Tube Structure
100: Tube body 100M: Unit Tube
200: Reinforcing block 200M: Unit Block
200M-1: first Unit Block Unit 200M-2: Second Unit Block Unit
200M-3: Third Unit Block Unit 210: Contact Surface
230: Slot Hole 250: Internal Groove
300: Fastening Unit 310: First Fastening member
330: Second fastening member 400: Sealing Unit
410: Sealing body 430: First Insertion Groove
450: Second Insertion Groove D1: Longitudinal Direction
D2: Height Direction D3: Width Direction
H: Minimum Installation Height H1: 1 Minimum Installation Height
H2: Second Minimum Installation Height HC: Central Installation Height
HE: End Installation Height O: Central Axis
R: Diameter S: Movement Path
W: Installation Width W1: First Installation Width
W2: Second Installation Width

## Claims

1. A tube structure comprising:
a tube body having therein a movement path along which a traveling body moves; and
a reinforcing block that is formed of a different material from the tube body and coupled to the tube body in the longitudinal direction of the tube body to reinforce the tube body,
wherein the reinforcing block has a contact surface in surface contact with an outer surface of the tube body, and the contact surface extends in the longitudinal direction of the reinforcing block.

2. The tube structure of claim 1, wherein the tube body is comprised of a tubular member formed of a metal material, and
the reinforcing block is comprised of precast concrete, and the contact surface has a shape corresponding to the outer surface of the tube body.

3. The tube structure of claim 1, wherein the reinforcing block is coupled to an upper side of the tube body.

4. The tube structure of claim 1, wherein the tube body is configured so that a plurality of unit tubes are continuously disposed in a longitudinal direction, and
the reinforcing block connects adjacent unit tubes.

5. The tube structure of claim 1, wherein the tube body is configured so that a plurality of unit tubes are continuously disposed in the longitudinal direction,
the reinforcing block is configured so that a plurality of unit blocks are continuously disposed in the longitudinal direction, and
the unit blocks are installed over the unit tubes adjacent to each other to connect adjacent unit tubes.

6. The tube structure of claim 1, wherein the reinforcing block is configured so that a plurality of unit blocks are continuously disposed in a longitudinal direction, and
the unit block comprises a plurality of unit block units in which at least one of an installation width in a width direction and a minimum installation height in a height direction is varied.

7. The tube structure of claim 1, wherein the reinforcing block has an installation width in a range of 20 to 35% of a diameter of the tube body in a width direction.

8. The tube structure of claim 7, wherein the reinforcing block is configured so that a minimum installation height in a height direction is in a range of 10 to 20% of the installation width.

9. The tube structure of claim 1, further comprising:
a fastening unit installed to protrude from the outer surface of the tube body, and fastened while penetrating through the reinforcing block to connect the tube body and the reinforcing block.

10. The tube structure of claim 9, wherein the fastening unit is configured to,
detachably connect the tube body and the reinforcing block.

11. The tube structure of claim 9, wherein the fastening unit comprises:
a first fastening member formed to protrude from the outer surface of the tube body and penetrating through the reinforcing block; and
a second fastening member detachably fastened to the first fastening member, and configured to bring the contact surface of the reinforcing block into close contact with the outer surface of the tube body.

12. The tube structure of claim 11, wherein a plurality of fastening units are formed to be spaced apart from each other in the longitudinal direction of the tube body, and
a plurality of first fastening members are formed to be spaced apart from each other in a circumferential direction of the tube body.

13. The tube structure of claim 1, wherein the tube body is configured so that a plurality of unit tubes are continuously disposed in a longitudinal direction, and
the tube structure further comprises:
a sealing unit having a ring-shaped shape into which an end region of the adjacent unit tubes in the longitudinal direction is inserted and a space between the adjacent unit tubes is sealed.

14. The tube structure of claim 13, wherein the sealing unit comprises:
a sealing body disposed between two adjacent unit tubes;
a first insertion groove formed on one side of the sealing body and into which the unit tube of one side is inserted; and
a second insertion groove formed on the other side of the sealing body and into which the unit tube of the other side is inserted.
